(19) Europäisches Patentamt
European Patent Office
Office européen des brevets

(11) **EP 2 658 160 B1**

(12) **EUROPEAN PATENT SPECIFICATION**

(45) Date of publication and mention
of the grant of the patent:
**12.08.2015 Bulletin 2015/33**

(51) Int Cl.:
*H04L 5/00* (2006.01)    *H04L 25/02* (2006.01)

(21) Application number: **12290144.0**

(22) Date of filing: **27.04.2012**

(54) **CHANNEL ESTIMATION FOR A SECONDARY CARRIER IN LTE APPLYING CARRIER AGGREGATION**

KANALSCHÄTZUNG FÜR EINEN SEKUNDÄRTRÄGER IN LTE MIT TRÄGERAGGREGATION

ESTIMATION DE CANAL POUR UNE PORTEUSE SECONDAIRE DANS LTE AVEC L'AGRÉGATION DE PORTEUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.10.2013 Bulletin 2013/44**

(73) Proprietor: **ALCATEL LUCENT**
**92100 Boulogne-Billancourt (FR)**

(72) Inventors:
• **Ben Rached, Nidham**
**91620 Nozay (FR)**
• **De Lannoy, Arnaud**
**91620 Nozay (FR)**
• **Cayla, Stéphane**
**91620 Nozay (FR)**

(74) Representative: **Berthier, Karine**
**Alcatel-Lucent**
**148/152, route de la Reine**
**92100 Boulogne-Billancourt (FR)**

(56) References cited:
**WO-A1-2011/085191**

**Description**

FIELD OF THE INVENTION

The present invention relates to a method for carrier aggregation in LTE-Advanced (LTE-A) systems.

BACKGROUND OF THE INVENTION

In order to meet the ever evolving demand for wireless broadband services from fast-growing mobile users, optimal and efficient use of frequency spectrum is more than ever of current interest. In this regards, Carrier Aggregation (CA) technology (also known as multi-carrier-operation) has been recently proposed (LTE Release 10).

Mainly, CA technology allows eNodeB (such as macro-cell, pico-cell or femto-cell) to aggregate two or more carriers of different bandwidths - belonging to contiguous or non-contiguous frequency bands - for a single User Equipment (UE). Hence, it is possible to schedule a UE capable of CA (i.e. LTE-A UE or CA UE) on multiple carriers simultaneously, leading to substantially increasing the peak throughput per UE. In other words, with carrier aggregation, a UE may access from the same eNodeB, in addition to a primary carrier as "legacy" LTE UEs (i.e. non-CA UEs or a Rel'8 UE), to multiple secondary carriers (also said secondary component carriers, or secondary bands) simultaneously and thereby take advantages of the wider bandwidth.

To that end, a LTE-A UE (in the following designated as UE only) has to initiate a suitable signaling, towards the eNodeB, on the primary component carrier so as to be assigned on one or more secondary bands when it is necessary. In particular, the UE is required to perform various radio resources managements (RRM) functionalities relevant to uplink CA.

In fact, accurate measurements on secondary bands are mandatory not only for link adaptation, MIMO management, and spectral efficiency (such as modulation, coding, and MIMO coding schemes), but also for

- CA configuration, for determining, for example, which secondary band and which transmission mode are the most effective (data sent on different secondary bands can be transmitted with independent modulation and SISO/MIMO coding schemes);
- CA activation: a multifunctional UE (simultaneously enabling, for example, VoIP, Internet, FTP, mobile TV) should for example be able to start as soon as possible to transmit on secondary bands without altering, even temporarily, ongoing sessions.

Hence, the UE is constrained to provide to the eNodeB, in the uplink, reports related to the downlink channel conditions

- in a periodic manner, wherein measurement are sent on the PUCCH (Physical Uplink Control Channel) ; or
- in an aperiodic manner, wherein measurements are sent on the PUSCH (Physical Uplink Shared Channel).

However, whatever signaling is transmitted in a periodic or aperiodic manner, on the one hand the uplink traffic is impacted as a significant bandwidth has to be allocated thereto; on the other hand the eNodeB modem may be overloaded. Furthermore, in the case of an aperiodic measurement, a specific mechanism at the scheduler level has to be expected.

Accordingly, such secondary bands measurement and uplink control signaling from the UE to the eNodeB may be seen as a significant drain of the uplink capacity and UE energy. In addition, they reduce the efficiency of CA as they take a non-negligible time, thereby preventing an instantaneous access to secondary bands upon request from the UE.

One object of the present invention is to minimize the measurements performed by UE so as to be scheduled on one or more secondary bands.

Another object of the present invention is to enhance the performance of uplink CA in LTE-A systems.

Another object of the present invention is to preserve the uplink bandwidth within CA technology.

Another object of the present invention is to provide a method for secondary bands configuration and activation as soon as a UE requests to be scheduled thereon.

A solution to arrived at the above mentioned objectives is provided in WO 2011/085191 A1, where CQ1 of a second component carrier is used to estimate the CQ1 of a first component carrier by using a correction factor.

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

The present invention relates to a method as claimed in claim 1.

The present invention further relates to an eNodeB as claimed in claim 6. A LTE-A system comprising such eNodeB is also disposed in claims 9.

The present invention further relates to a computer program product for performing the above method, as claimed in claim 10.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

BRIEF DESCRIPTION OF THE DRAWINGS

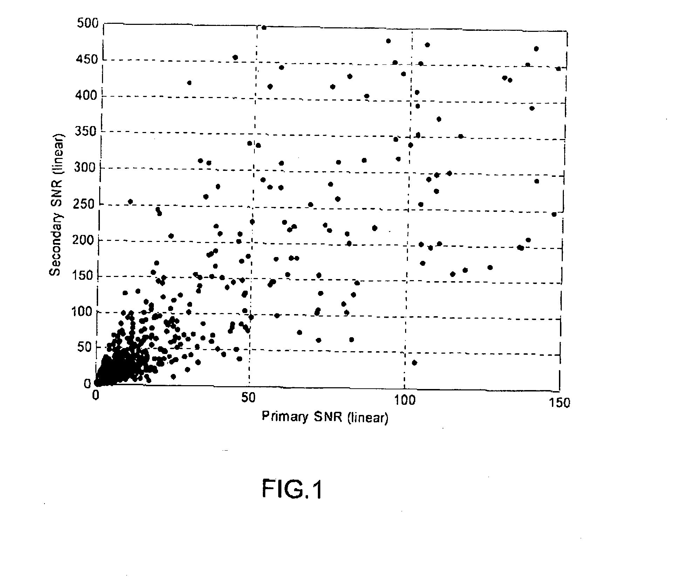

The above and other objects and advantages of the invention will become apparent from the detailed description of preferred embodiments, considered in conjunction with the accompanying drawing, in which Fig.1 is a schematic diagram illustrating the correlation between reported Channel Quality Indicators (CQIs), respectively, of a primary and a secondary carriers.

DESCRIPTION OF PREFERRED EMBODIMENTS

With CA, a UE can have a plurality of serving cells which are under the control of an eNodeB, these serving cells operating on different carriers. These carriers are configured in pairs comprising a downlink carrier and an associated uplink carrier. One of these carriers (or bands) is designated the primary carrier (comprising a primary uplink carrier, and an associated primary downlink carrier). The remaining carriers are designated secondary bands (each one comprising a secondary uplink carrier, and an associated secondary downlink carrier).

It is to be noted that the configuration of the primary carrier is UE specific. That is to say, a first UE does not necessarily have the same primary carrier as that of a second UE.

Moreover, UEs are configured to reports (in a periodic or aperiodic manner) Channel Quality Indicators (COIs) concerning carriers on which they are scheduled. These CQIs comprise, among others, channel-state information such as Signal-to-Interference plus Noise Ratio (SINR) and traffic measurements such as volume and priority. CQIs are transmitted on uplink carriers and are utilized by the eNodeB to select appropriate configuration parameters (link adaptation, modulation, coding for example) to use, respectively, for their associated downlink carriers.

More broadly, for each measurement of the primary downlink carrier is associated all measurements of the secondary carrier sent by UE in the same RRC or layer two messages.

Accordingly, it ensues that a plurality of CQIs, reported by UEs which may be scheduled on primary as well as on secondary carriers, are made available to the eNodeB.

Theses reported CQIs, or at least a predefined number of the most recent reported CQIs, are stored by the eNodeB. These reported CQIs of secondary and primary carriers constitute a historic of measured CQIs.

As soon as a UE requests to be scheduled on a given secondary carrier, the COI of this secondary carrier is estimated from previously reported CQIs by means of a Self Optimized Network (SON) algorithm. Hence, the requested secondary carrier is immediately configured and activated without need of measurements to be performed by the UE and then reported in its primary uplink carrier.

The statistical distributions of the previously reported CQIs are used to estimate radio conditions of any secondary carrier subsequently requested during carrier aggregation configuration and activation phases (i.e. without need of measurements to be performed and reported to the eNodeB by the UE).

The estimation of the COI of a secondary carrier comprises the following iterative steps:

-    computing the distribution (figure 1) of a predefined number of the most recent previously reported CQIs by UEs on PUCCH and PUSCH channels (or equivalently, distribution of the reported CQIs during the preceding time interval (2 minutes for example). In other words, computing the correlation between the reported CQIs (figure 1) with a forgetting factor in order to take into the load of the network;

-    mathematically deriving, from the reported SINR, a linear regression (in the minimum square sense) coefficient relating a secondary carrier to a primary carried in the form: SINR (secondary) = $\underline{a}$*SINR(primary). It is assumed, here, that within the forgetting factor time, the primary and the secondary SINR related to two reported CQIs have statistically strong linear regression (figure 1), mainly in terms of path loss and loading traffic between the two carriers. This regression coefficient derived over time is valid for all UEs attached to the eNodeB via the primary carrier and requesting to be scheduled on the secondary carrier. As an illustrative example, let SINR_P(k), k=1..n (n being an integer equal or greater than 2, SINR_P to say the SINR of the Primary carrier), the set of measurements on primary carrier and SINR_S(k), k=1..n (SINR_S to say the SINR of the Secondary carrier, the corresponding measurements on secondary carrier, the regression coefficient $\underline{a}$, could be estimated according to the following expression :

$$a = \frac{\sum_{i=1}^{n}(SINR\_P(i) - mp)\,(SINR\_S(i) - ms)}{\sum_{i=1}^{n}(SINRP(i) - ms)^2}$$

Where

$$mp = \sum_{i=1}^{n} SINR\_P(i) \quad \text{and} \quad ms = \sum_{i=1}^{n} SINR\_S(i)$$

- estimating the CQI of the secondary carrier on which the UE requests to be scheduled, using the current derived regression coefficient $\underline{a}$(t) and a tuning function $\underline{C}$(t,UE) (or a correction factor) derived from an outer loop control (BLER) mechanisms for finer tuning. Accordingly, the SINR for the secondary carrier requested by the UE is obtained by multiplying the SINR of the primary carrier of this UE (SINR(UE=k,primary)) by the current derived regression coefficient ($\underline{a}$(t)) and by the outer loop control function ($\underline{C}$(t,UE=k)) as follows:

$$SINR(UE=k, secondary) = \underline{a}(t)^* SINR(UE=k, primary)^* \underline{C}(t, UE=k)$$

It is to be noted that when there is no statistical data, mainly in an initialization step, these features (namely, the regression coefficient) are based on initial values set at the OAM level, based on simulation results.

As an illustrative example highlighting the linear correlation between the SINR of a primary carrier and that of a secondary carrier as formulated by the above equation, figure 1 shows, in linear scale, points (primary SINR, secondary SINR}, primary SINR and secondary SINR being obtained from CQIs, respectively, reported on the primary carrier and on the secondary carrier.

Accordingly, the configuration setting (modulation scheme and channel coding rate) of the secondary carrier are adjusted according to the estimated CQI (SINR(UE=k, secondary)) from the most recently reported SINR by UEs under the control of the eNodeB. Then, the secondary carrier is immediately activated without need of measurement to be performed by the UE in consequence of his request to be scheduled on this secondary carrier. Thus, the link adaptation is achieved according to the experienced radio conditions by UEs attached to the eNodeB.

It is to be noted that the forgetting factor (i.e. the predefined time/interval and/or number of the most recent reported CQIs) and the date of the reported CQIs are of important consideration, since if the most recent CQI report was received a significant time before the secondary carrier scheduling, the configuration of the secondary carrier may be not optimal. This is due to the eventual large change in the channel quality between the time of the most recent reported CQI and the time at which the secondary band is configured.

Advantageously, in this regard, the eNodeB is configured to adjust the frequency with which the CQI reports are transmitted from UEs, so that it is able to get up-to-date CQIs.

Advantageously, the above described method for secondary bands scheduling permits

- faster decisions at call establishment and during handover for the CA configuration:
- faster decisions during calls for the CA activation;
- a significant reduction of the amount of uplink measurements, thus a significant increase of the uplink network capacity;
- to preserve the transmission power limit of the UE;
- load balancing among aggregated bands, without impacting the uplink capacity of the primary band.

Moreover, the above described method is useful not only from a UE perspective, by preserving uplink bandwidth, but also from eNodeB perspective as it lightens the load of eNodeB charge.

**Claims**

1. A method for carrier aggregation comprising an estimation step of a channel quality indicator of a secondary carrier from a channel quality indicator of a primary carrier **characterized by** using at least a regression coefficient relating the channel quality indicator of the primary carrier to the channel quality indicator of the secondary carrier, said regression coefficient being calculated from a predefined number of the most recent reported channel quality indicators of the secondary carrier and from a predefined number of the most recent reported channel quality indicators of the primary carrier, said channel quality indicator being the signal-to-interference plus noise ratio, said regression coefficient being calculated as follows:

$$\text{regression\_coefficient} = \frac{\sum_{i=1}^{n}(SINR\_P(i) - mp)\,(SINR\_S(i) - ms)}{\sum_{i=1}^{n}(SINR\_P(i) - ms)^2}$$

Where $mp = \sum_{i=1}^{n} SINR\_P(i)$ and $ms = \sum_{i=1}^{n} SINR\_S(i)$

n being the predefined number of the most recent reported signal-to-interference plus noise ratio, respectively, of the primary carrier and the secondary carrier
SINR_P(k) being the signal-to-interference plus noise ratio of the Primary carrier for k=1 to n, and SINR_S(k) being the signal-to-interference plus noise ratio of the Secondary carrier for k=1 to n.

2. The method of claim 1, wherein the channel quality indicator of the secondary carrier is obtained by multiplying the channel quality indicator of the said primary carrier by the said regression coefficient and by a tuning function.

3. The method of claim 1 or 2, further comprising a configuration step of the secondary carrier according to the estimated channel quality indicator.

4. The method of the preceding claim, further comprising an activation step of the configured secondary carrier.

5. The method of claim 1, wherein the regression coefficient is calculated from initial values based on simulation results.

6. An eNodeB configured to estimate a channel quality indicator of a secondary carrier from a channel quality indicator of a primary carrier **characterized by** using at least a regression coefficient relating the channel quality indicator of the primary carrier to the channel quality indicator of the secondary carrier, said regression coefficient being calculated from a predefined number of the most recent reported channel quality indicators of the secondary carrier and from a predefined number of the most recent reported channel quality indicators of the primary carrier, said channel quality indicator being the signal-to-interference plus noise ratio, said regression coefficient being calculated as follows:

$$\text{regression\_coefficient} = \frac{\sum_{i=1}^{n}(SINR\_P(i) - mp)\,(SINR\_S(i) - ms)}{\sum_{i=1}^{n}(SINR\_P(i) - ms)^2}$$

Where

$$mp = \sum_{i=1}^{n} SINR\_P(i) \quad \text{and} \quad ms = \sum_{i=1}^{n} SINR\_S(i)$$

n being the predefined number of the most recent reported signal-to-interference plus noise ratio, respectively, of the primary carrier and the secondary carrier
SINR_P(k) being the signal-to-interference plus noise ratio of the Primary carrier for k=1 to n, and SINR_S(k) being the signal-to-interference plus noise ratio of the Secondary carrier for k=1 to n.

7. The eNodeB of claim 6, wherein it is configured to estimate the channel quality indicator of the secondary carrier in response to a request, from a user equipment attached thereto, to be scheduled on the secondary carrier.

8. The eNodeB of claim 6 or 7, wherein it is further configured to configure the secondary carrier according to the estimated channel quality indicator.

9. A Long Term Evolution Advanced system comprising an eNodeB according to any of claim 6 to 8.

10. Computer program implemented on a processing unit of a computer, said program including code sections for performing instructions corresponding to the steps of a method according to any of claims 1-5.

**Patentansprüche**

1. Verfahren für eine Träger-Aggregation, umfassend einen Schätzschritt eines Kanalqualitätsindikators eines Sekundärträgers von einem Kanalqualitätsindikator eines Primärträgers, **gekennzeichnet durch** das Verwenden von mindestens einem Regressionskoeffizienten, der den Kanalqualitätsindikator des Primärträgers mit dem Kanalqualitätsindikator des Sekundärträgers in Beziehung bringt, wobei der besagte Regressionskoeffizient von einer vorausdefinierten Zahl der jüngst gemeldeten Kanalqualitätsindikatoren des Sekundärträgers und von einer vorausdefinierten Zahl der jüngst gemeldeten Kanalqualitätsindikatoren des Primärträgers berechnet wird, wobei der besagte Kanalqualitätsindikator das Signal-zu-Interferenz-und-Rausch-Verhältnis ist, wobei der besagte Regressionskoeffizient wie folgt berechnet wird:

Regressionskoeffizient

$$= \frac{\sum_{i=1}^{n}(SINR\_P(i) - mp)(SINR\_S(i) - ms)}{\sum_{i=1}^{n}(SINR\_P(i) - ms)^2}$$

Wobei

$$mp = \sum_{i=1}^{n} SINR\_P(i) \text{ and } ms = \sum_{i=1}^{n} SINR\_S(i)$$

wobei n die vorausdefinierte Zahl des jüngst gemeldeten Signal-zu-Interferenz-und-Rausch-Verhältnisses jeweils des Primärträgers und des Sekundärträgers ist,
wobei SINR_P(k) das Signal-zu-Interferenz-und-Rausch-Verhältnis des Primärträgers für k=1 bis n ist, und wobei SINR_S(k) das Signal-zu-Interferenz-und-Rausch-Verhältnis des Sekundärträgers für k=1 bis n ist.

2. Verfahren nach Anspruch 1, wobei man den Kanalqualitätsindikator des Sekundärträgers durch Multiplizieren des Kanalqualitätsindikators des besagten Primärträgers mit dem besagten Regressionskoeffizienten und mit einer Abstimmungsfunktion erhält.

3. Verfahren nach Anspruch 1 oder 2, weiterhin umfassend einen Konfigurationsschritt des Sekundärträgers entsprechend dem geschätzten Kanalqualitätsindikator.

4. Verfahren nach dem vorstehenden Anspruch, weiterhin umfassend einen Aktivierungsschritt des konfigurierten Sekundärträgers.

5. Verfahren nach Anspruch 1, wobei der Regressionskoeffizient von Ausgangswerten basierend auf Simulationsergebnissen berechnet wird.

6. eNodeB, ausgelegt zum Schätzen eines Kanalqualitätsindikators eines Sekundärträgers von einem Kanalqualitätsindikator eines Primärträgers, **gekennzeichnet durch** das Verwenden von mindestens einem Regressionskoeffizienten, der den Kanalqualitätsindikator des Primärträgers mit dem Kanalqualitätsindikator des Sekundärträgers in Beziehung bringt, wobei der besagte Regressionskoeffizient von einer vorausdefinierten Zahl der jüngst gemeldeten Kanalqualitätsindikatoren des Sekundärträgers und von einer vorausdefinierten Zahl der jüngst gemeldeten Kanalqualitätsindikatoren des Primärträgers berechnet wird, wobei der besagte Kanalqualitätsindikator das Signal-zu-Interferenz-und-Rausch-Verhältnis ist, wobei der besagte Regressionskoeffizient wie folgt berechnet wird:

Regressionskoeffizient

$$= \frac{\sum_{i=1}^{n}(SINR\_P(i) - mp)\,(SINR\_S(i) - ms)}{\sum_{i=1}^{n}(SINR\_P(i) - ms)^2}$$

Wobei

$$mp = \sum_{i=1}^{n} SINR\_P(i) \text{ and } ms = \sum_{i=1}^{n} SINR\_S(i)$$

wobei $\underline{n}$ die vorausdefinierte Zahl des jüngst gemeldeten Signal-zu-Interferenz-und-Rausch-Verhältnisses jeweils des Primärträgers und des Sekundärträgers ist,
wobei SINR_P(k) das Signal-zu-Interferenz-und-Rausch-Verhältnis des Primärträgers für k=1 bis n ist, und wobei SINR_S(k) das Signal-zu-Interferenz-und-Rausch-Verhältnis des Sekundärträgers für k=1 bis n ist.

7. eNodeB nach Anspruch 6, wobei sie ausgelegt ist zum Schätzen des Kanalqualitätsindikators des Sekundärträgers als Antwort auf eine Anfrage von einem angeschlossenen Benutzerendgerät, die auf dem Sekundärträger zu planen ist.

8. eNodeB nach Anspruch 6 oder 7, wobei sie weiterhin ausgelegt ist zum Konfigurieren des Sekundärträgers entsprechend dem geschätzten Kanalqualitätsindikator.

9. Long-Term-Evolution-Advanced-System, umfassend eine eNodeB nach einem beliebigen der Ansprüche 6 bis 8.

10. Computerprogramm, das auf einer Verarbeitungseinheit eines Computers implementiert ist, wobei das besagte Programm Codeabschnitte zum Ausführen von Befehlen umfasst, die den Schritten eines Verfahrens nach einem beliebigen der Ansprüche 1-5 entsprechen.

**Revendications**

1. Procédé d'agrégation de porteuses comprenant une étape d'estimation d'un indicateur de qualité du canal d'une porteuse secondaire à partir d'un indicateur de qualité du canal d'une porteuse primaire **caractérisé par** l'utilisation d'au moins un coefficient de régression mettant en rapport l'indicateur de qualité du canal de la porteuse primaire avec l'indicateur de qualité du canal de la porteuse secondaire, ledit coefficient de régression étant calculé à partir d'un nombre prédéfini des indicateurs de qualité du canal signalés les plus récents de la porteuse secondaire et à partir d'un nombre prédéfini des indicateurs de qualité du canal signalés les plus récents de la porteuse primaire, ledit indicateur de qualité du canal étant le rapport signal sur interférence plus bruit, ledit coefficient de régression étant calculé comme suit :

coefficient de régression

$$= \frac{\sum_{i=1}^{n}(SINR\_P(i) - mp)\,(SINR\_S(i) - ms)}{\sum_{i=1}^{n}(SINR\_P(i) - ms)^2}$$

où

$$mp = \sum_{i=1}^{n} SINR\_P(i) \text{ and } ms = \sum_{i=1}^{n} SINR\_S(i)$$

$\underline{n}$ étant le nombre prédéfini du rapport signal sur interférence plus bruit signalé le plus récent, respectivement, de la porteuse primaire et de la porteuse secondaire
SINR_P(k) étant le rapport signal sur interférence plus bruit de la porteuse primaire pour k=1 à n, et SINR_S(k) étant le rapport signal sur interférence plus bruit de la porteuse secondaire pour k=1 à n.

2. Procédé selon la revendication 1, dans lequel l'indicateur de qualité du canal de la porteuse secondaire est obtenu en multipliant l'indicateur de qualité du canal de ladite porteuse primaire par ledit coefficient de régression et par une fonction de réglage.

3. Procédé selon la revendication 1 ou 2, comprenant en outre une étape de configuration de la porteuse secondaire conformément à l'indicateur de qualité du canal estimé.

4. Procédé selon la revendication précédente, comprenant en outre une étape d'activation de la porteuse secondaire configurée.

5. Procédé selon la revendication 1, dans lequel le coefficient de régression est calculé à partir de valeurs initiales sur la base de résultats de simulation.

6. eNodeB configuré pour estimer un indicateur de qualité du canal d'une porteuse secondaire à partir d'un indicateur de qualité du canal d'une porteuse primaire **caractérisé par** l'utilisation d'au moins un coefficient de régression mettant en rapport l'indicateur de qualité du canal de la porteuse primaire avec l'indicateur de qualité du canal de la porteuse secondaire, ledit coefficient de régression étant calculé à partir d'un nombre prédéfini des indicateurs de qualité du canal signalés les plus récents de la porteuse secondaire et à partir d'un nombre prédéfini des indicateurs de qualité du canal signalés les plus récents de la porteuse primaire, ledit indicateur de qualité du canal étant le rapport signal sur interférence plus bruit, ledit coefficient de régression étant calculé comme suit :

coefficient de régression

$$= \frac{\sum_{i=1}^{n}(SINR\_P(i) - mp)(SINR\_S(i) - ms)}{\sum_{i=1}^{n}(SINR\_P(i) - ms)^2}$$

où

$$mp = \sum_{i=1}^{n} SINR\_P(i) \text{ and } ms = \sum_{i=1}^{n} SINR\_S(i)$$

$\underline{n}$ étant le nombre prédéfini du rapport signal sur interférence plus bruit signalé le plus récent, respectivement, de la porteuse primaire et de la porteuse secondaire SINR_P(k) étant le rapport signal sur interférence plus bruit de la porteuse primaire pour k=1 à n, et SINR_S(k) étant le rapport signal sur interférence plus bruit de la porteuse secondaire pour k=1 à n.

7. eNodeB selon la revendication 6, configuré pour estimer l'indicateur de qualité du canal de la porteuse secondaire en réponse à une demande, provenant d'un équipement utilisateur fixé à celui-ci, à planifier sur la porteuse secondaire.

8. eNodeB selon la revendication 6 ou 7, configuré en outre pour configurer la porteuse secondaire conformément à l'indicateur de qualité du canal estimé.

9. Système avancé d'évolution à long terme comprenant un eNodeB selon l'une quelconque des revendications 6 à 8.

10. Programme informatique exécuté sur une unité de traitement d'un ordinateur, ledit programme comprenant des sections de code pour exécuter des instructions correspondant aux étapes d'un procédé selon l'une quelconque des revendications 1 à 5.

FIG.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011085191 A1